# EUROPEAN PATENT APPLICATION

(11) **EP 0 992 699 A2**
(43) Date of publication of application: **12.04.2000**
(21) Application number: 99307772.6
(22) Date of filing: 01.10.1999
(51) Int. Cl.: F16D 13/68

(54) **Clutch plate**

(30) Priority: 09.10.1998 GB 9821924
(71) Applicant: Safe Developments Limited, London WC1X 8BY (GB)
(72) Inventor: Albon, Laurence, Hockley, Essex SS5 4TF (GB); Harris, Robert, Raylight, Essex SS6 8EZ (GB)
(74) Representative: Messulam, Alec Moses

(57) **Abstract**

A clutch plate 16 is disclosed that comprises a hub 30 to be connected in use to the input shaft of a gearbox and a friction plate 32 coupled for rotation with the hub 30 and carrying a friction lining 36 to be gripped when in use between an engine flywheel 10 and a pressure plate 20 mounted on the flywheel to transmit torque from the engine to the gearbox.

In the invention, the hub 30 of the clutch plate 16 comprises two parts 40, 42, the friction plate 32 is clamped between the two parts of the hub 30. Elastomeric pads 52, 54 are arranged between the friction plate 32 and the two parts 40, 42 of the hub 30 to transmit torque from the friction plate 32 to the hub 30, the engine torque applying a shear stress to the elastomeric pads 52, 54.

## Description

### Field of the invention

The present invention relates to a clutch plate and to a flywheel and clutch assembly.

### Background of the invention

A clutch plate as used in a driver operated clutch in a motor vehicle conventionally comprises a hub connected to the input shaft of the gearbox and a friction plate coupled for rotation with the hub and carrying a friction lining that is gripped between the engine flywheel and a pressure plate mounted on the flywheel to transmit torque from the engine to the gearbox. The friction plate is commonly designed for limited angular movement relative to the hub and is coupled to the hub through tangentially arranged coil springs that serve as dampers to reduce torque surges into the gearbox.

Such a construction has certain disadvantages in that the metal to metal contact of the springs is a source of noise. Furthermore engine vibrations are still transmitted to the drive train.

### Summary of the invention

With a view to mitigating the foregoing disadvantage, there is provided in accordance with the present invention, a clutch plate comprising a hub to be connected in use to the input shaft of a gearbox and a friction plate coupled for rotation with the hub and carrying a friction lining to be gripped when in use between an engine flywheel and a pressure plate mounted on the flywheel to transmit torque from the engine to the gearbox, wherein the hub of the clutch plate comprises two parts, the friction plate is clamped between the two parts of the hub, and elastomeric pads are arranged between the friction plate and the two parts of the hub to transmit torque from the friction plate to the hub, the engine torque applying a shear stress to the elastomeric pads.

In the preferred embodiment of the invention, the two parts of the hub are axially spaced concentric discs and the elastomeric pads are axially compressed between the two discs and the friction plate.

In the invention, the torque transmitted from the engine to the gearbox applies a shear stress to the elastomeric pads. The resilience of the elastomeric pads allows them to undergo shear deformation and in so doing they act as shock absorbers by taking up and damping engine vibrations. By contrast with known clutch plates which use tangential springs to absorb engine vibrations, in the clutch plate of the present invention there is no relative movement of any metal components that are in contact with one another, so that noise is reduced.

It is preferred for the elastomeric pads to be complete rings but it is alternatively possible to use a series of circumferentially spaced pads.

Though axial clamping of the pads between the two parts of the hub may alone suffice to ensure that they do not slip relative to the surfaces of the hub and the friction plate, it is preferred to bond the pads to the parts of the hub and the friction plate.

The tangential resilience of the pads will depend upon their axial compression as well as upon the elasticity of the elastomeric material. The degree of axial compression may serve as a useful control parameter to allow the damping properties to be calibrated during manufacture.

A particular advantage of the clutch plate of the invention is that it permits the hub to be formed with through holes without interfering with its operation. By aligning such through holes with the heads of the bolts that secure the flywheel to the crankshaft, this enables a clutch to be fitted to a flywheel before the flywheel is mounted on the engine, thereby allowing the speed of a vehicle assembly line to be increased.

It is common for a pressure plate assembly to comprise a conical diaphragm spring for urging the pressure plate towards the flywheel face having radially inwardly extending fingers that can be contacted by a clutch release bearing to release the clutch. To allow a clutch and flywheel assembly to be fitted to an engine it is necessary to form apertures in the pressure plate assembly aligned with the apertures in the clutch plate and the flywheel, and this may conveniently be achieved by making some of the fingers shorter or by forming arcuate cut-outs in adjacent fingers.

### Brief description of the drawings

The invention will now be described further, by way of example, with reference to the accompanying drawings, in which:
Figure 1 is an axial section through a flywheel and clutch assembly in the section plane designated III-III in Figure 2,
Figure 2 is end view of one of two discs constituting the hub of the clutch plate, and
Figure 3 is a section through the two discs of the hub of the clutch plate in the section plane designated III-III in Figure 2.

### Detailed description of the preferred embodiments

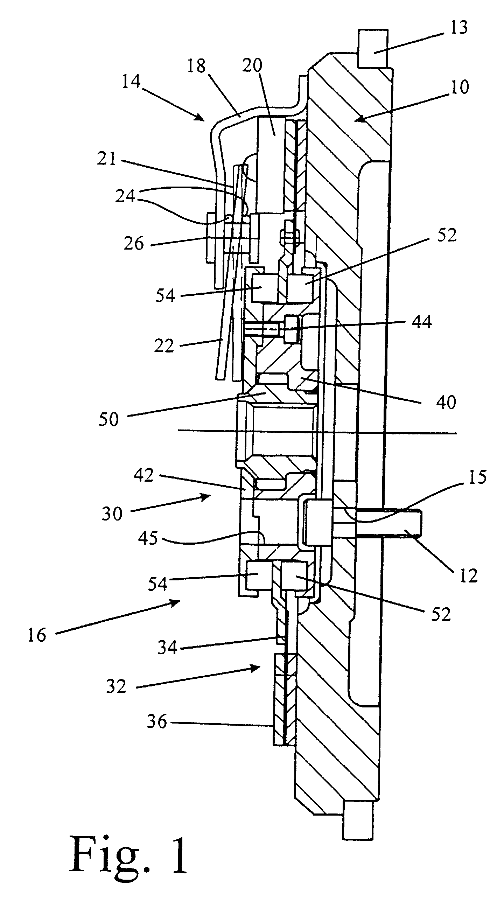

Figure 1 is a partial section through a flywheel and clutch assembly. The assembly comprises a flywheel 10 which in use is secured to an engine crankshaft by means of bolts 12 passing through holes 15 in the flywheel, there being eight such bolts in the illustrated embodiment. The flywheel 10 has a ring gear 13 to be engaged by a starter motor in the usual manner.

A clutch pressure plate assembly generally designated 14 and a clutch plate generally designated 16 are secured to the flywheel 10 by means of bolts (not shown) passing through holes in the casing 18 of the pressure plate assembly 14 into threaded bores in the flywheel 10. The pressure plate assembly 14 is only shown in the upper half of Figure 1 and has been omitted from the lower half so that the clutch plate 16 may be seen more clearly.

The pressure plate assembly 14 is generally conventional and comprises, in addition to the outer casing 18, a pressure plate 20 that is urged in the direction of the face of the flywheel 10 by means of a conical diaphragm spring 21 having radially inwardly extending fingers 22 that act as release levers. The diaphragm spring 21 is supported on the casing 18 by means of two fulcrum rings 24 which are themselves retained by pins 26 in the casing.

In operation, to release the clutch, the fingers 22 that are defined by radial cuts in the diaphragm spring 21 are pushed by a clutch release bearing (not shown) towards the flywheel 10 and the force acts to distort the diaphragm spring 21 from the position shown in the solid lines to the position shown in dotted lines. In the latter position, the pressure plate 20 is moved away from the face of the flywheel 10 to release the clamping pressure on the clutch plate 16.

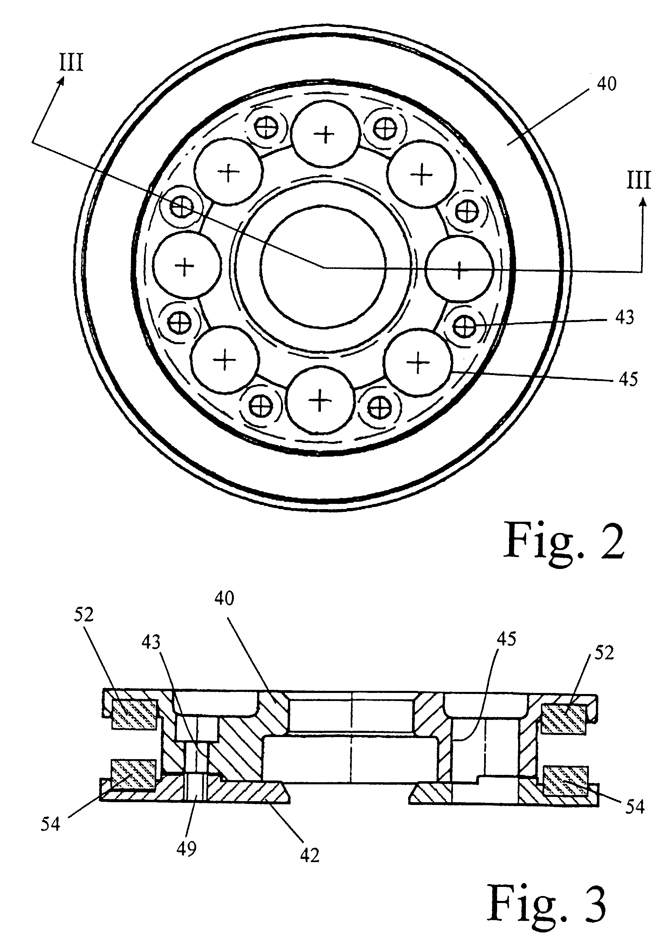

The clutch plate 16 is formed of a central hub generally designated 30 and a friction plate 32. The friction plate 32 is formed of an annular disc 34 carrying friction linings 36 on its opposite sides and is disposed between the pressure plate 20 and the flywheel 10. The hub 30 is formed of two discs 40, 42 that are bolted to one another by means of eight bolts 44 passing through holes 43 in the disc 40 into threaded holes 49 in the disc 42 (see Figure 2 and 3). The discs 40 and 42 may be secured to one another using alternative means, such as rivets or welding.

A splined socket 50 for receiving the gearbox input shaft (not shown in Figure 3) is captive between the two discs 40 and 42 and is connected for rotation with the two discs 40, 42 of the hub. It is alternatively possible to form the splined socket integrally with one of the two discs 40, 42.

The radially outer edges of the two discs 40, 42 straddle the inner edge of the annular disc 34 of the friction plate 32, the annular disc 34 being clamped in position between them by means of two elastomeric pads 52, 54, which in the case of the illustrated embodiment are rubber friction rings that extend around the entire periphery of the hub 30. It is preferred that the pads 52, 54 be bonded to the surfaces of the annular disc 34 and the two discs 40, 42 that constitute the hub 30.

As can be seen from the front view of the disc 40 shown in Figure 2, in addition to the holes 43 for the bolts 44, the hub 16 is formed with eight apertures 45 that are arranged on the same centres as the bolts 12 securing the flywheel to the engine crankshaft. The number of apertures 45 must match the number of bolts 12 securing the flywheel to the engine crankshaft, but it is possible to use a different number of bolts.

The clutch plate 16 and the pressure plate assembly 14 can be mounted on the flywheel 10 to form a sub-assembly before the flywheel is fitted to the engine. This is because the hub 30 is formed with holes that allow access to the heads of the bolts 12 securing the flywheel 10 to the engine crankshaft. The fingers 22 can be formed with cut-outs to allow access to the bolts 12 or some of the fingers may be made shorter for the same purpose.

In use, the friction plate 32 may rotate slightly relative to the hub 30 by resilient shearing distortion of the rings 52, 54. This provides a mechanism for absorbing and damping engine output torque fluctuations.

If desired, the damping may be further improved by incorporating a secondary isolation system between the hub 30 and the splined socket 50.

Though in the described preferred embodiment of the invention the annular disc 34 is axially clamped between the two discs 40 and 42, it is possible in an alternative embodiment of the invention to design the hub of the clutch plate to exert a radial frictional clamping force on the friction plate.

The invention thus provides a clutch that can damp oscillation effectively while effectively reducing torque surges passed to the gearbox and the vehicle drive train. Further, the design of the clutch plate hub affords sufficient space to form holes for accessing the bolts securing the flywheel to the engine crankshaft, thereby enabling a more efficient method of assembling the flywheel and clutch on the engine during vehicle manufacture.

## Claims

1. A clutch plate (16) comprising a hub (30) to be connected in use to the input shaft of a gearbox and a friction plate (32) coupled for rotation with the hub (30) and carrying a friction lining (36) to be gripped when in use between an engine flywheel (10) and a pressure plate (20) mounted on the flywheel (10) to transmit torque from the engine to the gearbox, characterised in that the hub (30) of the clutch plate (16) comprises two parts (40,42), the friction plate (32) is clamped between the two parts (40, 42) of the hub (30), and elastomeric pads (52, 54) are arranged between the friction plate (32) and the two parts (40, 42) of the hub (30) to transmit torque from the friction plate (32) to the hub (30), the engine torque applying a shear stress to the elastomeric pads (52, 54).

2. A clutch plate as claimed in claim 1, wherein the two parts of the hub are axially spaced concentric discs (40, 42) and the elastomeric pads (52, 54) are axially compressed between the two discs (40, 42) and the friction plate (32).

3. A clutch plate as claimed in claim 2, wherein the elastomeric pads (52, 54) are circumferentially complete rings concentric with the axis of the hub.

4. A clutch plate as claimed in any preceding claim, wherein the pads (52, 54) are bonded to the two parts (40, 42) of the hub (30) and to the friction plate (32).

5. A clutch plate as claimed in any preceding claim, wherein the hub (30) is formed with through holes (45) to allow access to the heads of bolts mounting the engine flywheel on the engine crankcase, so as to enable a clutch to be fitted to a flywheel before the flywheel is mounted on the engine.

6. A clutch plate as claimed in claim 5, in combination with a flywheel (10) and a pressure plate assembly (14) for an engine, wherein the pressure plate assembly (14) comprises a conical diaphragm spring (21) for urging the pressure plate (20) towards the face of the flywheel (10), the conical spring (21) having radially inwardly extending fingers (22) that serve as clutch release levers and wherein pairs of fingers (22) are formed with opposed arcuate cut-outs to define access apertures for bolts used to secure the flywheel and clutch assembly to an engine crankshaft.
